# EUROPÄISCHE PATENTANMELDUNG

(11) **EP 2 916 433 A1**
(43) Veröffentlichungstag der Anmeldung: **09.09.2015**
(21) Anmeldenummer: 14158039.9
(22) Anmeldetag: 06.03.2014
(51) Int. Cl.: H02K 1/20

(54) **Elektrische Maschine mit durch Kühlgas gekühltem Rotor**

(71) Anmelder: Siemens Aktiengesellschaft, 80333 München (DE)
(72) Erfinder: Festa, Marco, 14612 Falkensee (DE); Centner, Matthias, 10555 Berlin (DE); Sabelfeld, Ilja, 10437 Berlin (DE)

(57) **Zusammenfassung**

Die Erfindung betrifft eine elektrische Maschine (1) mit einem mittels eines Kühlgases gekühlten Rotor (3) und einem den Rotor (3) umgebenden Stator (5), der mehrere Teilblechpakete (13) aufweist. Die Teilblechpakete (13) sind in einer zu einer Rotationsachse (7) des Rotors (3) parallelen axialen Richtung hintereinander angeordnet und durch Strömungskanäle (23), die rotorseitig zur Zuführung des Kühlgases zu dem Rotor (3) offen sind, voneinander getrennt.

## Beschreibung

Die Erfindung betrifft eine elektrische Maschine mit einem mittels eines Kühlgases gekühlten Rotor.

Bei einer derartigen elektrischen Maschine wird der Rotor von außen über dessen Mantelfläche gekühlt. Dabei ist die oberflächennahe Strömungsführung des Kühlgases maßgebend für die Effektivität der Rotorkühlung. Bei großen Maschinen, deren Rotoren auf diese Weise gekühlt werden, tritt das Kühlgas gewöhnlich axial von beiden Enden in den Luftspalt zwischen Rotor und Stator ein, wird aufgrund von Rotorverlusten und Luftreibungsverlusten erwärmt und tritt dann über Ventilationskanäle im Stator in radialer Richtung aus dem Luftspalt aus.

Der Erfindung liegt die Aufgabe zugrunde, eine insbesondere hinsichtlich der Rotorkühlung verbesserte elektrische Maschine mit einem mittels eines Kühlgases gekühlten Rotor anzugeben.

Die Aufgabe wird erfindungsgemäß durch die Merkmale des Anspruchs 1 gelöst.

Vorteilhafte Ausgestaltungen der Erfindung sind Gegenstand der Unteransprüche.

Eine erfindungsgemäße elektrische Maschine weist einen mittels eines Kühlgases gekühlten Rotor und einen den Rotor umgebenden Stator auf. Der Stator weist mehrere Teilblechpakete auf, die in einer zu einer Rotationsachse des Rotors parallelen axialen Richtung hintereinander angeordnet und durch Strömungskanäle, die rotorseitig zur Zuführung des Kühlgases zu dem Rotor offen sind, voneinander getrennt sind.

Durch die zwischen den Teilblechpaketen angeordneten Strömungskanäle kann der Rotor direkt mit Kühlgas beströmt werden, wodurch der Rotor vorteilhaft effektiver mit dem Kühlgas beströmt werden kann als mittels der bekannten axialen Einleitung von Kühlgas in den Luftspalt zwischen Stator und Rotor, weil das Verhältnis zwischen einem durch eine Wärmeübergangszahl erzielten Nutzen und einem durch die Strömungsleistung bestimmten Aufwand verbessert wird.

Eine Ausgestaltung der Erfindung sieht wenigstens ein Kanalblech vor, das ein Teilblechpaket zu einem Strömungskanal begrenzt und einen rotorseitigen Endabschnitt aufweist, der eine entlang des Strömungskanals verlaufende Kühlgasströmung aus einer zu der Rotationsachse weisenden radialen Richtung ablenkt.

Durch ein derartiges Kanalblech wird vorteilhaft eine Prallströmung, die aus einem Strömungskanal senkrecht auf die Außenoberfläche des Rotors gerichtet ist, verhindert. Eine genau senkrechte Prallströmung ist nachteilig, da sie einen hohen Druckverlust zur Folge hat und sich vom Zentrum des Prallpunktes allseitig ausbreitet und dadurch die Hauptströmung behindert. Der hohe Druckverlust müsste durch einen hohen Lüfterdruck ausgeglichen werden und hätte einen hohen Leistungsbedarf eines den Lüfterdruck erzeugenden Lüfters zur Folge.

Eine weitere Ausgestaltung der Erfindung sieht wenigstens ein Kanalblechpaar zweier derartiger Kanalbleche vor, wobei jedes der beiden Kanalbleche eines von zwei benachbarten Teilblechpaketen zu dem diese Teilblechpakete trennenden Strömungskanal begrenzt.

Durch ein derartiges Kanalblechpaar kann die Strömung des Kühlgases durch einen Strömungskanal von zwei Seiten und damit noch effektiver gelenkt werden.

Eine Weitergestaltung der vorgenannten Ausgestaltung der Erfindung sieht vor, dass die rotorseitigen Endabschnitte der Kanalbleche eines Kanalblechpaares strömungskanalseitige Oberflächen aufweisen, die derart ausgebildet sind, dass Tangentialebenen an diese Oberflächen in rotorseitigen Randpunkten der Oberflächen wenigstens annähernd zueinander parallel sind und nicht verschwindende Winkel mit einer zur Rotationsachse orthogonalen Ebene bilden.

Diese Weitergestaltung ermöglicht vorteilhaft eine Lenkung der aus einem Strömungskanal austretenden Kühlgasströmung mittels der Oberflächen der rotorseitigen Endabschnitte der Kanalbleche in eine Richtung, die eine zur Außenoberfläche des Rotors tangentiale Komponente aufweist.

Eine weitere Ausgestaltung der Erfindung sieht vor, dass der Stator für jedes Paar benachbarter Teilblechpakete ein Kanalblechpaar aufweist.

Durch diese Ausgestaltung der Erfindung kann vorteilhaft die Kühlgasströmung am rotorseitigen Ende jedes zwischen zwei benachbarten Teilblechpaketen angeordneten Strömungskanals gelenkt werden.

Eine weitere Ausgestaltung der Erfindung sieht vor, dass die beiden Kanalbleche eines Kanalblechpaares durch wenigstens einen Stützsteg miteinander verbunden sind.

Dadurch kann vorteilhaft mittels wenigstens eines Stützsteges ein Abstand zwischen zwei Teilblechpaketen festgelegt werden.

Eine weitere Ausgestaltung der Erfindung sieht vor, dass ein rotorseitiger Endabschnitt wenigstens eines Kanalbleches wenigstens einen Kamm aufweist, der zur Lenkung einer Kühlgasströmung in eine Richtung mit einer nicht verschwindenden zu der axialen Richtung und zu der radialen Richtung orthogonalen Komponente ausgebildet ist.

Dadurch erhält die Kühlgasströmung am rotorseitigen Ende wenigstens eines Strömungskanals auch eine Komponente, die orthogonal zur axialen Richtung und tangential zu der Außenoberfläche des Rotors gerichtet ist. Eine derartige Komponente wirkt sich vorteilhaft auf die Luftreibungsverluste aus und begünstigt eine spiralförmig um die Außeroberfläche des Rotors verlaufende Kühlgasströmung mit einem geringen Druckverlust. Diese Ausgestaltung ist besonders vorteilhaft, wenn die elektrische Maschine für eine (Vorzugs-) Drehrichtung des Rotors ausgelegt ist.

Eine weitere Ausgestaltung der Erfindung sieht vor, dass ein rotorseitiger Endabschnitt wenigstens eines Kanalbleches ein Versteifungselement aufweist.

Eine Versteifung eines Endabschnittes eines Kanalbleches ist besonders vorteilhaft herstellbar, wenn das Kanalblech als Stanzumformteil hergestellt wird.

Eine weitere Ausgestaltung der Erfindung sieht vor, dass jedes Teilblechpaket mehrere um die Rotationsachse herum verteilte Nuten aufweist, durch die Windungen von Statorspulen des Stators geführt sind, und dass jedes Kanalblech eines Teilblechpakets zu den Nuten korrespondierende Aussparungen aufweist.

Diese Ausgestaltung der Erfindung berücksichtigt vorteilhaft, dass ein Stator üblicherweise Nuten für die Statorspulen aufweist, und passt die Gestaltung der Kanalbleche dieser Ausbildung eines Stators an.

Eine weitere Ausgestaltung der Erfindung sieht vor, dass jedes Kanalblech aus einem Metall oder aus einer Metalllegierung gefertigt ist.

Ein Metall oder eine Metalllegierung eignet sich besonders vorteilhaft als Material eines Kanalbleches, da es eine stabile und verschweißbare Ausbildung des Kanalbleches ermöglicht. In diesem Zusammenhang wird darauf hingewiesen, dass entgegen der üblichen Bedeutung des Wortes "Blech" der Begriff "Kanalblech" in dieser Anmeldung nicht notwendig impliziert, dass das Kanalblech aus einem Metall oder einer Metalllegierung gefertigt ist.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch einen Ausschnitt eines Längsschnittes durch eine elektrische Maschine,
- FIG 2: eine perspektivische Darstellung eines Abschnitts eines ersten Kanalblechs,
- FIG 3: eine perspektivische Darstellung eines Abschnitts eines zweiten Kanalblechs, und
- FIG 4: eine perspektivische Darstellung eines Abschnitts eines dritten Kanalblechs.

Einander entsprechende Teile sind in allen Figuren mit den gleichen Bezugszeichen versehen.

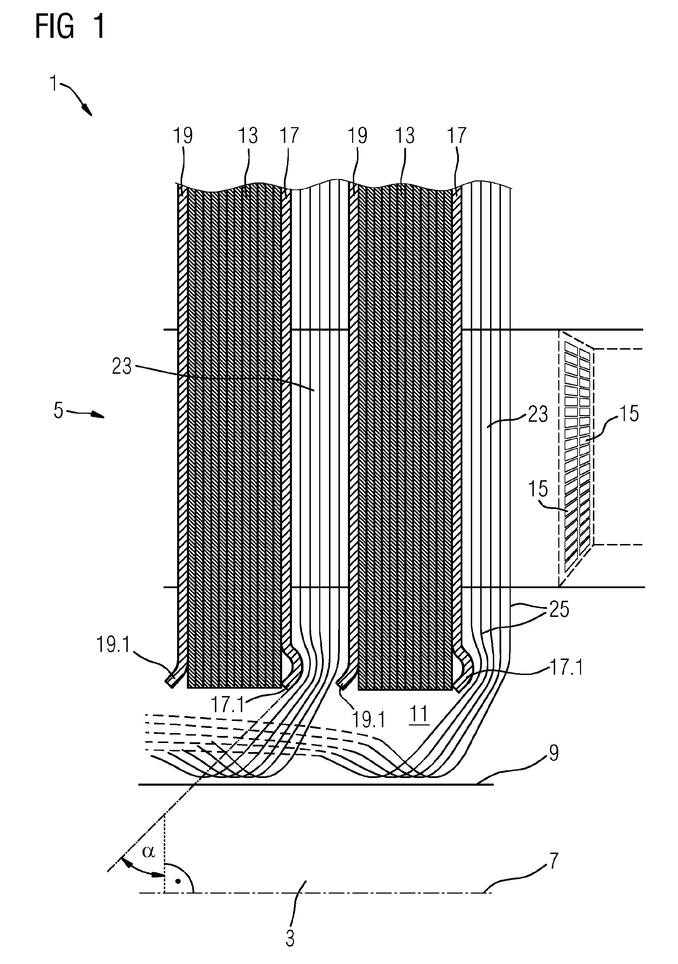

Figur 1 zeigt einen Ausschnitt eines Längsschnittes durch eine elektrische Maschine 1 mit einem Rotor 3 und einem den Rotor umgebenden Stator 5.

Der Rotor 3 ist um eine Rotationsachse 7 rotierbar gelagert und im Wesentlichen kreiszylinderförmig ausgebildet, wobei die Zylinderachse mit der Rotationsachse 7 zusammenfällt. Die zylindermantelförmige Außenoberfläche 9 des Rotors 3 ist durch einen Luftspalt 11 von dem Stator 5 getrennt.

Der Stator 5 weist mehrere in einer zur Rotationsachse 7 parallelen axialen Richtung hintereinander angeordnete Teilblechpakete 13 auf. Jedes Teilblechpaket 13 ist im Wesentlichen kreisringförmig um die Rotationsachse 7 herum ausgebildet und weist mehrere um die Rotationsachse 7 herum verteilte (in Figur 1 nicht dargestellte) Nuten auf, durch die jeweils in bekannter Weise (in Figur 1 ebenfalls nicht dargestellten) Windungen von Statorspulen des Stators 5 geführt sind. Angedeutet sind ferner hinter der Zeichenebene verlaufende Leiter 15, die Teil der Statorspulen sind, in einer von der übrigen Darstellung der Figur 1 abweichenden perspektivischen Darstellung.

Die Teilblechpakete 13 sind voneinander durch Strömungskanäle 23 getrennt, die rotorseitig, d. h. zu dem Luftspalt 11 offen sind. Durch die Strömungskanäle 23 wird zur Kühlung des Rotors 3 ein Kühlgas, beispielsweise Luft, in den Luftspalt 11 und damit zu der Außenoberfläche 9 des Rotors 3 geführt.

Jedes Teilblechpaket 13 weist an jeder Seite, die einem benachbarten Teilblechpaket 13 zugewandt ist, ein Kanalblech 17, 19 auf, das das Teilblechpaket 13 zu dem dortigen Strömungskanal 23 begrenzt. Dabei weist jedes Teilblechpaket 13 an einer Seite ein erstes Kanalblech 17 und an der gegenüber liegenden Seite ein zweites Kanalblech 19 auf, wobei sich diese beiden Kanalbleche 17, 19 voneinander unterscheiden.

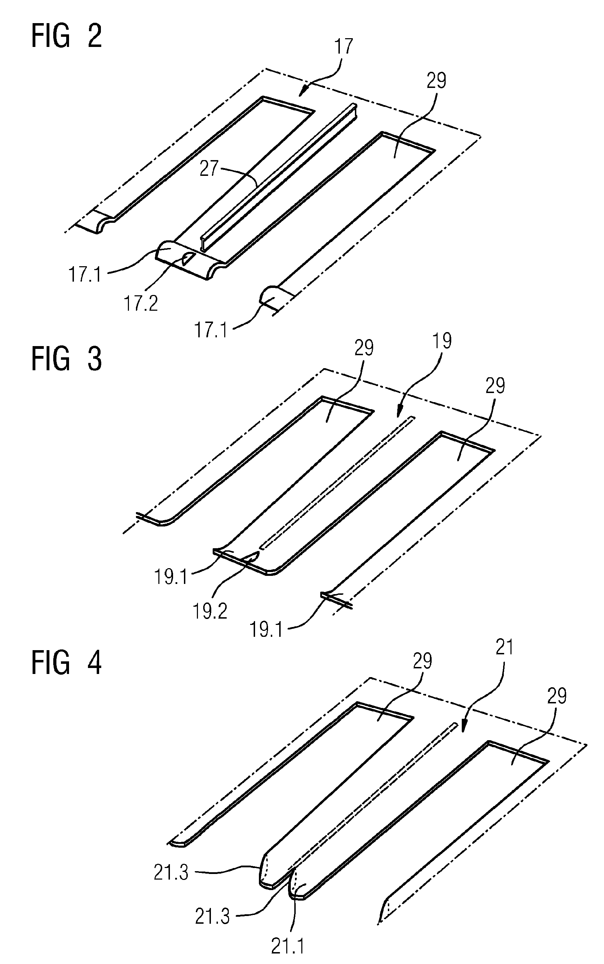

Ferner werden je zwei benachbarte Teilblechpakete 13 zu dem diese Teilblechpakete 13 trennenden Strömungskanal 23 von zwei verschiedenen Kanalblechen 17, 19 begrenzt, d. h. von einem ersten Kanalblech 17 und einem zweiten Kanalblech 19, die jeweils eines der beiden Teilblechpakete 13 zu dem Strömungskanal 23 begrenzen. Die beiden Kanalbleche 17, 19 eines derartigen Kanalblechpaares bilden einander gegenüber liegende Wände des Strömungskanals 23 und werden im Folgenden anhand der Figuren 2 und 3 näher beschrieben.

Figur 2 zeigt eine perspektivische Darstellung eines Abschnitts eines ersten Kanalblechs 17.

Figur 3 zeigt eine perspektivische Darstellung eines Abschnitts eines zweiten Kanalblechs 19.

Die Kanalbleche 17, 19 weisen rotorseitige Endabschnitte 17.1, 19.1 auf, die dazu ausgebildet sind, durch die Strömungskanäle 23 verlaufende Kühlgasströmungen aus zu der Rotationsachse 7 weisenden radialen Richtungen abzulenken. Die Kühlgasströmungen sind in Figur 1 durch Stromlinien 25 dargestellt.

Zur Strömungsführung des Kühlgases weist der rotorseitige Endabschnitt 17.1 eines ersten Kanalblechs 17 eine krallenartige Wölbung auf und der rotorseitige Endabschnitt 19.1 eines zweiten Kanalblechs 19 ist umgebogen. Dabei sind die Endabschnitte 17.1, 19.1 derart ausgebildet, dass Tangentialebenen an ihre Oberflächen in rotorseitigen Randpunkten dieser Oberflächen wenigstens annähernd zueinander parallel sind und jeweils einen nicht verschwindenden Winkel α mit einer zur Rotationsachse 7 orthogonalen Ebene bilden. Dadurch werden die aus einem Strömungskanal 23 in den Luftspalt 11 austretenden Kühlgasströmungen jeweils etwa um die Winkel α aus den zu der Rotationsachse weisenden radialen Richtungen abgelenkt und weisen somit zur Außenoberfläche 9 des Rotors 3 tangentiale und axial gerichtete Komponenten auf.

Optional weisen die Endabschnitte 17.1, 19.1 ferner Versteifungselemente 17.2, 19.2 auf, die beispielsweise als Einkerbungen ausgebildet sind.

Jedes erste Kanalblech 17 weist ferner einen Stützsteg 27 auf, der als Abstandshalter zwischen benachbarten Teilblechpaketen 13 dient und beispielsweise mit dem zweiten Kanalblech 19 verschweißt wird, das mit dem ersten Kanalblech 17 ein Kanalblechpaar bildet.

Jedes Kanalblech 17, 19 weist ferner zu den Nuten des von ihm begrenzten Teilblechpaketes 13 korrespondierende Aussparungen 29 auf.

Figur 4 zeigt eine perspektivische Darstellung eines Abschnitts eines dritten Kanalblechs 21, das alternativ zu dem in Figur 3 dargestellten zweiten Kanalblech 19 ein Teilblechpaket 13 begrenzen kann. Ein drittes Kanalblech 21 weist einen rotorseitigen Endabschnitt 21.1 auf, der wie der rotorseitige Endabschnitt 19.1 des zweiten Kanalblechs 19 umgebogen ist, aber zusätzlich zwei Kämme 21.3 aufweist, die jeweils zur Lenkung einer Kühlgasströmung in eine Richtung mit einer nicht verschwindenden zu der axialen Richtung und zu der radialen Richtung orthogonalen Komponente ausgebildet ist. Die Kämme 21.3 werden in dem in Figur 4 dargestellten Ausführungsbeispiel durch Umbiegen eines Eckbereiches und eines Mittelbereiches des Endabschnitts 21.1 erzeugt, wozu der Endabschnitt 21.1 in der Mitte eingeschnitten ist.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Anmeldung zu verlassen.

## Patentansprüche

1. Elektrische Maschine (1)
- mit einem mittels eines Kühlgases gekühlten Rotor (3)
- und einem den Rotor (3) umgebenden Stator (5), der mehrere Teilblechpakete (13) aufweist,
- wobei die Teilblechpakete (13) in einer zu einer Rotationsachse (7) des Rotors (3) parallelen axialen Richtung hintereinander angeordnet
- und durch Strömungskanäle (23), die rotorseitig zur Zuführung des Kühlgases zu dem Rotor (3) offen sind, voneinander getrennt sind.

2. Elektrische Maschine (1) nach Anspruch 1,
**gekennzeichnet durch** wenigstens ein Kanalblech (17, 19, 21), das ein Teilblechpaket (13) zu einem Strömungskanal (23) begrenzt und einen rotorseitigen Endabschnitt (17.1, 19.1, 21.1) aufweist, der eine entlang des Strömungskanals (23) verlaufende Kühlgasströmung aus einer zu der Rotationsachse (7) weisenden radialen Richtung ablenkt.

3. Elektrische Maschine (1) nach Anspruch 2,
**gekennzeichnet durch** wenigstens ein Kanalblechpaar zweier Kanalbleche (17, 19, 21), die jeweils eines von zwei benachbarten Teilblechpaketen (13) zu dem diese Teilblechpakete (13) trennenden Strömungskanal (23) begrenzen.

4. Elektrische Maschine (1) nach Anspruch 3,
**dadurch gekennzeichnet, dass** die rotorseitigen Endabschnitte (17.1, 19.1, 21.1) der Kanalbleche (17, 19, 21) eines Kanalblechpaares strömungskanalseitige Oberflächen aufweisen, die derart ausgebildet sind, dass Tangentialebenen an diese Oberflächen in rotorseitigen Randpunkten der Oberflächen wenigstens annähernd zueinander parallel sind und nicht verschwindende Winkel (α) mit einer zur Rotationsachse (7) orthogonalen Ebene bilden.

5. Elektrische Maschine (1) nach Anspruch 3 oder 4,
**dadurch gekennzeichnet, dass** der Stator (5) für jedes Paar benachbarter Teilblechpakete (13) ein Kanalblechpaar aufweist.

6. Elektrische Maschine (1) nach einem der Ansprüche 3 bis 5,
**dadurch gekennzeichnet, dass** die beiden Kanalbleche (17, 19, 21) eines Kanalblechpaares durch wenigstens einen Stützsteg (27) miteinander verbunden sind.

7. Elektrische Maschine (1) nach einem der Ansprüche 2 bis 6,
**dadurch gekennzeichnet, dass** ein rotorseitiger Endabschnitt (17.1, 19.1, 21.1) wenigstens eines Kanalbleches (17, 19, 21) wenigstens einen Kamm (21.3) aufweist, der zur Lenkung einer Kühlgasströmung in eine Richtung mit einer nicht verschwindenden zu der axialen Richtung und zu der radialen Richtung orthogonalen Komponente ausgebildet ist.

8. Elektrische Maschine (1) nach einem der Ansprüche 2 bis 7,
**dadurch gekennzeichnet, dass** ein rotorseitiger Endabschnitt (17.1, 19.1, 21.1) wenigstens eines Kanalbleches (17, 19, 21) ein Versteifungselement (17.2, 19.2) aufweist.

9. Elektrische Maschine (1) nach einem der Ansprüche 2 bis 8,
**dadurch gekennzeichnet, dass** jedes Teilblechpaket (13) mehrere um die Rotationsachse (7) herum verteilte Nuten aufweist, durch die Windungen von Statorspulen des Stators (5) geführt sind, und dass jedes Kanalblech (17, 19, 21) eines Teilblechpaketes (13) zu den Nuten korrespondierende Aussparungen (29) aufweist.

10. Elektrische Maschine (1) nach einem der Ansprüche 2 bis 9,
**dadurch gekennzeichnet, dass** jedes Kanalblech (17, 19, 21) aus einem Metall oder aus einer Metalllegierung gefertigt ist.
